# EUROPÄISCHE PATENTSCHRIFT

(11) **EP 0 531 766 B1**
(45) Veröffentlichungstag und Bekanntmachung des Hinweises auf die Patenterteilung: **22.01.1997**
(21) Anmeldenummer: 92114169.3
(22) Anmeldetag: 20.08.1992
(51) Int. Cl.: B60G 13/18, B60G 15/06, F16F 9/54

(54) **Schwingungstilger**
Vibration absorber
Amortisseur d'oscillation

(30) Priorität: 09.09.1991 DE 4129797
(43) Veröffentlichungstag der Anmeldung: 17.03.1993
(73) Patentinhaber: Dr.Ing.h.c. F. Porsche Aktiengesellschaft, D-70435 Stuttgart (DE)
(72) Erfinder: Kohlmeier, Hans-Heinrich, W-7251 Mönsheim (DE); Baumann, Peter, W-7130 Mühlacker (DE); Bayer, Heinz, W-7900 Ulm (DE)

(56) Entgegenhaltungen:
- WO-A-89/05242
- DE-A- 3 913 528
- FR-A- 2 535 259
- PATENT ABSTRACTS OF JAPAN vol. 14, no. 247 (M-978)1990 & JP-A-02 068 212 (MAZDA)
- PATENT ABSTRACTS OF JAPAN vol. 11, no. 228 (M-610)(2675) 1987 & JP-A-62 041 435 (KINUGAWA RUBBER IND.)

## Beschreibung

Die Erfindung bezieht sich auf einen Schwingungstilger nach dem Oberbegriff des Anspruchs 1. Ein solcher Schwingungstilger ist aus der Schrift FR-A-2 535 259 bekannt.

Bei Kraftfahrzeugen, insbesondere bei Fahrzeugen in Cabriolet-Bauweise treten aufgrund der größeren Weichheit der Karosse gegenüber Fahrzeugen in Coupé-Bauweise vermehrt Schwingungen auf bzw. es können Schwingungen durch Anregungen z.B. über das Rad und das Dämpferbein in die Karosserie übertragen werden, was den Fahrkomfort wesentlich beeinträchtigt.

Aufgabe der Erfindung ist es, einen Schwingungstilger zu schaffen, der als Bausatz in einfacher Bauweise mit dem Dämpferbein verbindbar ist und der einen über die Kolbenstange in die Karosse eintretenden Schwingungsanteil, welcher ein Zittern verursacht, dämpfen soll.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß mittels eines in einfacher Bauweise ausgebildeten Tilgers die das Zittern der Karosserie hervorrufenden Schwingungen, welche über die Kolbenstange in den Fahrzeugaufbau eingeleitet werden, gedämpft werden. Dies erfolgt insbesondere durch ein Massenelement, das über mehrere elastische Arme mit der Kolbenstange verbunden wird. Diese Elastizität ermöglicht eine reduzierte Relativbewegung der Kolbenstange aufgrund des Massenelements, welches über einen Topf unmittelbar auf dem elastischen Lager des Dämpferbeines am Fahrzeugaufbau befestigt ist.

Am Topfelement ist ein axialer Druckanschlag für das Dämpferbein und eine axiale Führungseinrichtung mit einem Zuganschlag vorgesehen. Hierdurch wird zum einen die Ein- und Ausfederungsbewegung des Dämpferbeines begrenzt und andererseits der Tilger in axialer Richtung zwangsgeführt um unkontrollierte axiale Bewegungen aufgrund der elastischen Arme zu vermeiden.

Die Trägerplatte ist so ausgeführt, daß sowohl die elastischen Arme als auch eine hülsenförmige Aufnahme für das Topfelement anvulkanisiert sind, bzw. die metallische Aufnahme und Trägerplatte in Gummi einvulkanisiert werden.

Die elastischen Arme des Tilgers sind von der Tragplatte umgeben, d.h. die Arme sind in korrespondierenden Ausschnitten der Platte angeordnet, wobei das Massenelement wiederum mit der Platte lösbar über Schrauben verbunden ist und jeweils zwischen zwei elastischen Armen Ansätze des Massenelements hineinragen, so daß sich ein in sich geschlossenes einteiliges der Umfangsform der Trägerplatte angepaßtes Massenelement ergibt.

Insbesondere ist vorgesehen, daß das Massenelement aus Blei besteht und mit wesentlichen Massen oberhalb der Trägerplatte angeordnet ist und sich punktuelle Massenanhäufungen bis in die Ebene des Bodens des Topfelements erstrecken. Der Schwerpunkt der Masse liegt in der Längsachse der Kolbenstange.

Durch diese Ausbildung des Tilgers wird es möglich, diesen oberhalb der elastischen Lagerung des Dämpferbeines am Fahrzeugaufbau in einfacher Weise anzuordnen, um Schwingungen von der Karosserie, die über die Kolbenstange eingeleitet werden, zu dämpfen.

Ein Ausführungsbeispiel der Erfindung ist in der Zeichnung dargestellt und wird im folgenden näher beschrieben.

Es zeigen:

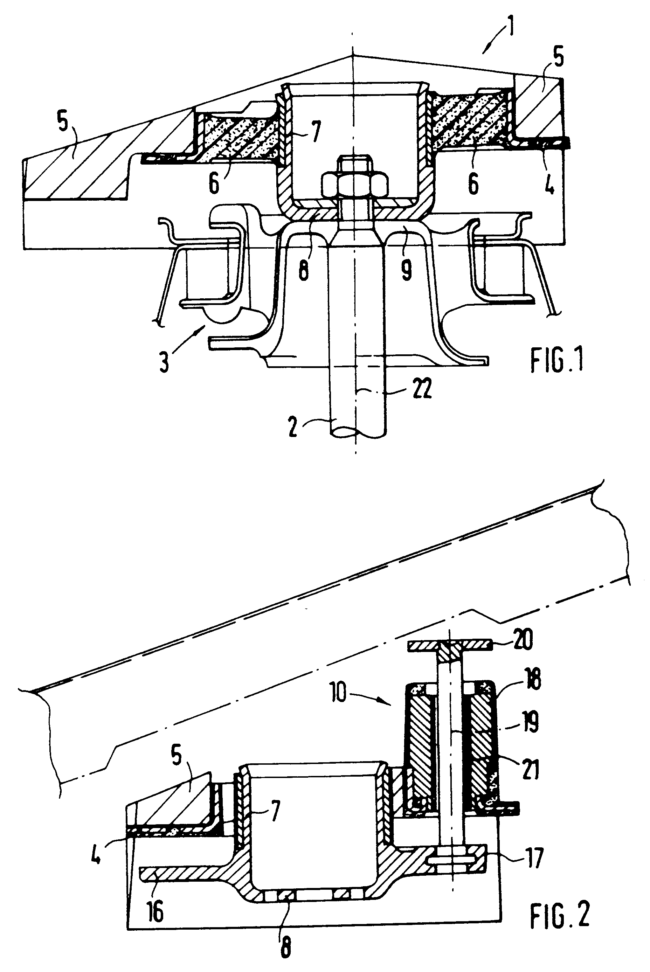

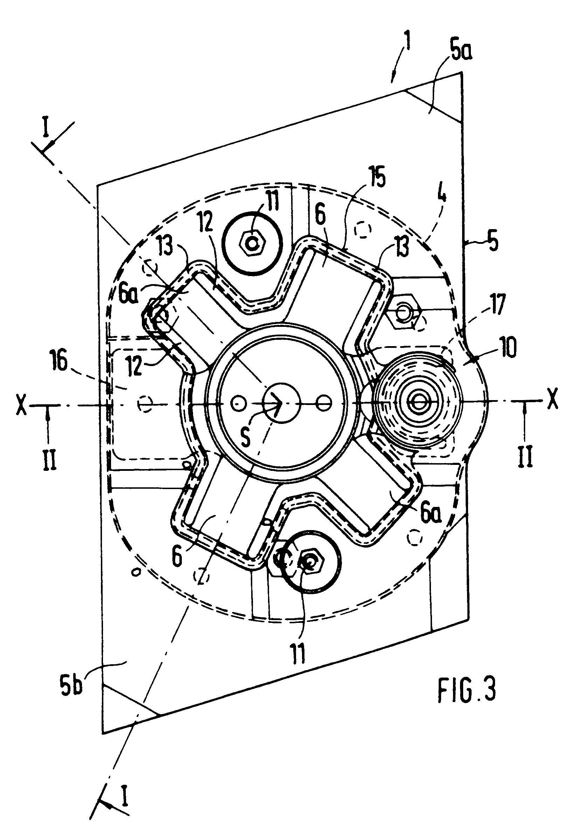

- Fig. 1: einen Schnitt durch einen mit einer Kolbenstange verbundenen Schwingungstilger nach der Linie I-I der Fig. 3,
- Fig. 2: einen Schnitt nach der Linie II-II der Fig. 2, und
- Fig. 3: eine Draufsicht auf den Schwingungstilger.

Ein Schwingungstilger 1 für ein Dämpferbein, von dem nur eine Kolbenstange 2 und eine obere elastische Lagerung 3 zur Abstützung am Fahrzeugaufbau dargestellt ist, umfaßt im wesentlichen ein mit einer Trägerplatte 4 verbundenes Massenelement 5, das über mehrere elastische Arme 6, 6a mittels eines Topfelementes 7 am freien oberen Ende der Kolbenstange 2 befestigt ist. Das Topfelement 7 stützt sich mit seinem Boden 8 an eine innere Lagerschale 9 des elastischen Dämpferbeinlagers 3 ab. Mit dem Topfelement 7 ist eine Führungseinrichtung 10 verbunden.

Das Massenelement 5 ist mit der Trägerplatte 4 über Schrauben 11 lösbar verbunden, so daß ein einfacher Austausch bzw. Ausbau zum Zwecke der umweltgerechten Verwertung möglich wird.

Das an der Kolbenstange 2 befestigte Topfelement 7 ist mit den elastischen Armen 6, 6a verbunden, die wiederum Teil der Trägerplatte 4 sind, so daß sich die Kolbenstange 2 relativ gegenüber dem Massenelement 5 elastisch bewegen kann.

Die Trägerplatte 4 weist sternförmig angeordnete Ausschnitte 12 auf, die von in einer horizontalen Ebene angeordneten U-förmigen Stegen 13 begrenzt sind und in denen die elastischen Arme 6, 6a mit jeweils seitlichen Freiräumen beweglich angeordnet sind.

Jeweils zwei elastische Arme 6 sind diametral gegenüberliegend angeordnet und bilden mit den weiteren elastischen Armen 6a ein sogenannten Kreuz. Die benachbarten Arme 6 und 6a sind etwa unter einem Winkel von 40 - 45° zueinander angeordnet.

Die U-förmigen Stege 13 der Trägerplatte 4 ragen in entsprechend geformte korrespondierende Ausnehmungen 15 des Massenelements 5, so daß sich ein der Umfangsform der Trägerplatte 4 angepaßtes Element 5 ergibt. Dieses ist mit einem Teil seiner Masse oberhalb der Trägerplatte 4 angeordnet und Massenanhäufungen 5a und 5b erstrecken sich etwa bis in die Ebene des Bodens 8 des Topfelements 7.

Dieses Topfelement 7 weist etwa in der Ebene seines Bodens 8 diametral gegenüberstehende, sich radial in einer horizontalen Ebene erstreckende metallische Arme 16, 17 auf, die als Anschlag für das Dämpferbein sowie für den Tilger 1 dienen.

Mit einem dieser Arme 16 oder 17 ist die Führungseinrichtung 10 verbunden. Diese umfaßt einen in einem Massenansatz 18 axial geführten Zapfen 19, der endseitig eine Anschlagplatte 20 aufweist, die am Massenansatz 18 anschlagen kann. Vorzugsweise ist der Zapfen in einer Kunststoffhülse 21 geführt.

Das Massenelement 5 besteht aus einem Metall hohen spezifischen Gewichts, wie z.B. Blei, wobei etwa gewichtsmäßig gleiche Massen zu einer senkrechten Ebene X-X, die durch die Längsachse 22 der Kolbenstange 2 verläuft, vorgesehen sind. Die Masse des Elements 5 weist einen Schwerpunkt S auf, der in der Längsachse 22 der Kolbenstange liegt.

Die Tilgermasse 5 ist vorzugsweise über mindestens vier elastische Arme 6 und 6a gehalten, wobei die metallischen Arme 16 und 17 des Topfelements 7 jeweils zwischen den elastischen Armen 6 und 6a angeordnet sind und die Trägerplatte 4 unmittelbar gegenübersteht.

## Patentansprüche

1. Schwingungstilger (1) für ein Dämpferbein, das an seiner dem Fahrzeugrad abgekehrten Seite eine Kolbenstange (2) aufweist, die sich an ihrem freien Ende durch eine obere elastische Lagerung (3) am Fahrzeugaufbau abstützt, wobei der Schwingungstilger (1) ein Massenelement (5) umfaßt, das mit einem elastischen Element (6) verbunden ist, das wiederum mit einem zentrischen Topfelement (7) des Schwingungstilgers verbunden ist, wobei das elastische Element (6) zwischen dem Massenelement und dem zentrischen Topfelement (7) angeordnet ist, so daß das Massenelement (5) an dem Topfelement befestigt ist, wobei das Topfelement am freien Ende der Kolbenstange (2) oberhalb der elastischen Lagerung (3) des Dämpferbeins gehalten werden kann, und wobei die Verbindung zwischen dem Massenelement (5) und dem elastischen Element dadurch gekennzeichnet, daß das Massenelement (5) mit einer Trägerplatte (4) verbunden ist, die zwischen dem Massenelement (5) und dem elastischen Element (6) angeordnet ist, und daß das elastische Element (6) sich radial erstreckende elastische Arme (6, 6a) umfaßt, die sich sternförmig in korrespondierende Ausschnitte (12) der Trägerplatte (4) erstrecken, wobei sich jeweils seitliche Freiräume ergeben, und die jeweils stirnseitig an einem Steg (13) des korrespondierenden Ausschnittes (12) der Trägerplatte (4) befestigt sind.

2. Schwingungstilger nach Anspruch 1, dadurch gekennzeichnet, daß das Masseelement (5) einen Schwerpunkt (S) aufweist, der in einer Längsachse (22) der Kolbenstange (2) liegt.

3. Schwingungstilger nach Anspruch 1, dadurch gekennzeichnet, daß eine Führungseinrichtung (10) einen mit einem Arm (16, 17) verbundenen, vertikal ausgerichteten Zapfen (19) aufweist, der in einer aus dem Massenelement (5) gebildeten Ansatzhülse (18) geführt ist und endseitig eine Anschlagplatte (20) besitzt.

4. Schwingungstilger nach Anspruch 3, dadurch gekennzeichnet, daß in der Hülse (18) eine Kunststoffbuchse (21) zur verschieblichen Aufnahme des Zapfens (19) angeordnet ist.

5. Schwingungstilger nach Anspruch 1, dadurch gekennzeichnet, daß die Trägerplatte (4) rundherum des Topfelements (7) angeordnet ist und die elastischen Arme (6, 6a) sich in die als U-förmige Stege (13) ausgebildeten Ausschnitte (12) der Trägerplatte (4) erstrecken und daß das Massenelement (5) auf der Trägerplatte (4) abgestützt und mit dieser lösbar über Schrauben (11) verbunden ist.

6. Schwingungstilger nach Anspruch 1, dadurch gekennzeichnet, daß die Trägerplatte (4) rundherum des Topfelements (7) angeordnet ist und die elastischen Arme (6, 6a) sich sternförmig in korrespondierende Ausschnitte (12) von U-förmigen Stegen (13) der Trägerplatte (4) erstrecken und daß das Massenelement (5) auf der Trägerplatte (4) abgestützt und mit dieser lösbar über Schrauben (11) verbunden ist.

7. Schwingungstilger nach Anspruch 6, dadurch gekennzeichnet, daß das Massenelement (5) der Umfangsform der Trägerplatte (4) angepaßt ist und die U-förmigen Stege (13) dieser Platte in korrespondierenden Ausnehmungen (15) des Massenelements (5) angeordnet sind.

8. Schwingungstilger nach einem oder mehreren der vorhergehenden Ansprüche, dadurch gekennzeichnet, daß die Trägerplatte (4) metallisch ausgebildet ist, und deren Oberflächen mit Gummi versehen sind, der mit den elastischen Armen (6, 6a) einteilig ist.

9. Schwingungstilger nach einem oder mehreren der vorhergehenden Ansprüche, dadurch gekennzeichnet, daß das Massenelement (5) aus Blei besteht und oberhalb der Trägerplatte (4) angeordnet ist und sich teilweise mit Massenanhäufung (5a und 5b) über den Umfang der Platte (4) bis in Höhe des Bodens (8) des Topfelements (7) erstreckt.

10. Schwingungstilger nach einem oder mehreren der vorhergehenden Ansprüche, dadurch gekennzeichnet, daß mindestens vier elastische Arme (6, 6a) vorgesehen sind, wobei sich jeweils zwei elastische Arme (6) diametral gegenüberstehen und benachbarte elastische Arme (6a) etwa unter einem Winkel von 45° zueinander angeordnet sind und die metallischen Arme (16, 17) des Topfelements (7) jeweils zwischen zwei elastischen Armen (6, 6a) angeordnet sind und unmittelbar der Trägerplatte (4) gegenüberstehen.

## Claims

1. A vibration damper (1) for a shock-absorbing leg which is provided on its side remote from the wheel of the vehicle with a piston rod (2) supported at its free end by an upper resilient mounting (3) on the vehicle body, wherein the vibration damper (1) comprises a mass body (5) connected to a resilient member (6) which is connected in turn to a central cup member (7) of the vibration damper, wherein the resilient member (6) is arranged between the mass body and the central cup member (7), so that the mass body (5) is secured to the cup member, wherein the cup member can be held at the free end of the piston rod (2) above the resilient mounting (3) of the shock-absorbing leg, and wherein the connexion between the mass body (5) and the resilient member [is] **characterized in that** the mass body (5) is connected to a support plate (4) interposed between the mass body (5) and the resilient member (6), and the resilient member (6) comprises radially extending resilient arms (6, 6a) extending in a star shape into corresponding recesses (12) in the support plate (4) - wherein lateral free spaces are formed in each case - and secured at the front end respectively to a web (13) of the corresponding recess (12) in the support plate (4).

2. A vibration damper according to Claim 1, **characterized in that** the mass body (5) has a centre of gravity (**S**) situated in the longitudinal axis (22) of the piston rod (2).

3. A vibration damper according to Claim 1, **characterized in that** a guiding device (10) comprises a vertically orientated pin (19) which is connected to an arm (16, 17) and which is guided in an attachment sleeve (18) formed by the mass body (5) and is provided at the end with a stop plate (20).

4. A vibration damper according to Claim 3, **characterized in that** a plastics bush (21) for receiving the pin (19) in a displaceable manner is arranged in the sleeve (18).

5. A vibration damper according to Claim 1, **characterized in that** the support plate (4) is arranged around the cup member (7), and the resilient arms (6, 6a) extend into the portions (12) of the support plate (4) formed as U-shaped webs (13), and the mass body (5) is supported on the support plate (4) and is connected thereto in a releasable manner by way of bolts (11).

6. A vibration damper according to Claim 1, **characterized in that** the support plate (4) is arranged around the cup member (7), and the resilient arms (6, 6a) extend in a star shape into corresponding portions (12) of U-shaped webs (13) of the support plate (4), and the mass body (5) is supported on the support plate (4) and is connected thereto in a releasable manner by way of bolts (11).

7. A vibration damper according to Claim 6, **characterized in that** the mass body (5) is adapted to the peripheral shape of the support plate (4), and the U-shaped webs (13) of the said plate are arranged in corresponding recesses (15) in the mass body (5).

8. A vibration damper according to one or more of the preceding Claims, **characterized** in **that** the support plate (4) is made of metal, and the surfaces thereof are provided with rubber which is integral with the resilient arms (6, 6a).

9. A vibration damper according to one or more of the preceding Claims, **characterized in that** the mass body (5) consists of lead and is arranged above the support plate (4) and extends in part with an accumulation of mass (5a and 5b) beyond the periphery of the plate (4) as far as the level of the base (8) of the cup member (7).

10. A vibration damper according to one or more of the preceding Claims, **characterized in that** at least four resilient arms (6, 6a) are provided, wherein two respective resilient arms (6) are arranged diametrically opposite each other and adjacent resilient arms (6a) are arranged substantially at an angle of 45° [thereto], and the metallic arms (16, 17) of the cup member (7) are each arranged between two resilient arms (6, 6a) and are directly opposite the support plate (4).

## Revendications

1. Amortisseur de vibration (1) pour une jambe d'amortisseur, présentant, sur son côté opposé à la roue du véhicule, une tige de piston (2) prenant appui à son extrémité libre par un palier (3) supérieur élastique sur la carrosserie du véhicule, l'amortisseur de vibration (1) comprenant un élément de masse (5) relié à un élément élastique (6) qui, a son tour, est relié à un élément en forme de pot (7) centré de l'amortisseur de vibration, l'élément élastique (6) étant disposé entre l'élément massique et l'élément en forme de pot (7) centré, de manière que l'élément de masse (5) soit fixé sur l'élément en forme de pot, l'élément en forme de pot pouvant être maintenu à l'extrémité libre de la tige de piston (2) au-dessus du palier élastique (3) de la jante d'amortisseur, et la liaison entre l'élément de masse (5) et l'élément élastique étant caractérise par le fait que l'élément de masse (5) est relié à une plaque support (4) disposée entre l'élément de masse (5) et l'élément élastique (6) et en ce que l'élément élastique (6) comprend des bras (6, 6a) élastiques, s'étendant radialement, qui s'étendent en étoile dans des échancrures (12) correspondantes de la plaque support (4), ceci donnant chaque fois des espaces libres latéraux, et les bras élastiques (6,6a) étant chacun fixés en face frontale sur une nervure (13) de l'échancrure (12) correspondante de la plaque support (4).

2. Amortisseur de vibration selon la revendication 1, caractérisé en ce que l'élément de masse (5) présente un centre de gravité (S) situé dans l'axe longitudinal (22) de la tige de piston (2).

3. Amortisseur de vibration selon la revendication 1, caractérisé en ce qu'un dispositif de guidage (10) présente un tourillon (19) orienté verticalement, relié à un bras (16, 17), le tourillon étant guidé dans une douille formant appendice (18), constituée à partir de l'élément de masse (5), et comportant à une extrémité une plaque de butée (20).

4. Amortisseur de vibration selon les revendications 1, 2 ou 3, caractérisé en ce que une douille en matière plastique (21) est disposée dans l'appendice (18) pour recevoir le tourillon (19) de façon à lui permettre de se déplacer.

5. Amortisseur de vibration selon la revendication 1, caractérisé en ce que la plaque support (4) est disposée tout autour de l'élément en forme de pot (7) et les bras élastiques (6, 6a) s'étendent dans les nervures (12), réalisées sous forme de nervures en forme de U (13), de la plaque support (4), et en ce que l'élément de masse (5) prend appui sur la plaque support (4) et est relié de façon désolidarisable à celle-ci par l'intermédiaire de vis (11).

6. Amortisseur de vibration selon la revendication 1, caractérisé en ce que la plaque support (4) est disposée tout autour de l'élément en forme de pot (7) et les bras élastiques (6, 6a) s'étendent en étoile dans des échancrures (12) correspondantes des nervures (13), en forme de U, de la plaque support (4), et en ce que l'élément de masse (5) prend appui sur la plaque support (4) et est relié à celle-ci de manière désolidarisable par l'intermédiaire de vis (11).

7. Amortisseur de vibration selon la revendication 6, caractérisé en ce que l'élément de masse (5) est adapté à la forme périphérique de la plaque support (4) et les nervures en forme de U (13) de cette plaque sont disposées dans des évidements (15) correspondants de l'élément de masse (5).

8. Amortisseur de vibration selon l'une ou plusieurs des revendications précédentes, caractérisé en ce que la plaque support (4) est métallique et ses surfaces sont pourvues de caoutchouc, formant une seule pièce avec les bras élastiques (6, 6a).

9. Amortisseur de vibration selon l'une ou plusieurs des revendications précédentes, caractérisé en ce que l'élément de masse (5) est en plomb, est disposé au-dessus de la plaque support (4) et s'étend partiellement, par une accumulation de matière (5a et 5b), sur la périphérie de la plaque (4) jusqu'au niveau du fond (8) de l'élément en forme de pot (7).

10. Amortisseur de vibration selon l'une ou plusieurs des revendications précédentes caractérisé en ce qu'au moins quatre bras élastiques (6, 6a) sont prévus, chaque fois deux bras élastiques (6) étant situés diamétralement opposés et des bras élastiques (6a) voisins étant disposés les uns par rapport aux autres sous un angle faisant environ 45° et les bras métalliques (16, 17) de l'élément en forme de pot (7) étant chacun disposés entre deux bras élastiques (6, 6a) et étant directement en regard vis à vis de la plaque support (4).
